# EUROPÄISCHE PATENTSCHRIFT

(11) **EP 0 726 428 B1**
(45) Veröffentlichungstag und Bekanntmachung des Hinweises auf die Patenterteilung: **11.04.2001**
(21) Anmeldenummer: 96102079.9
(22) Anmeldetag: 13.02.1996
(51) Int. Cl.: F24F 3/16, B01D 39/00, B01D 39/08, B01D 53/04, B01D 46/42, B01D 53/88

(54) **Sicherheitswerkbank**
Safety workbench
Etabli de sécurité

(30) Priorität: 13.02.1995 DE 19504707
(43) Veröffentlichungstag der Anmeldung: 14.08.1996
(73) Patentinhaber: Institut für Umwelttechnologie und Umweltanalytik e.V., 47229 Duisburg (DE); BERNER INTERNATIONAL GmbH, 25337 Elmshorn (DE)
(72) Erfinder: Günter, Schöppe, Dipl.-Volkswirt, 40668 Meerbusch (DE); Goldschmidt, Ralf, Dipl.-Ing., 47279 Duisburg (DE); Opiolka, Siegfried, Dr.-Ing, 47445 Moers (DE); Erich, Egon, Dr.-Ing., 47475 Kamp Lintfort (DE); Spanner, Stephan, Dipl.-Wirtschafts-Ing., 59227 Ahlen (DE); Mewis, Torsten, Dr. rer. nat., 59227 Ahlen (DE)
(74) Vertreter: Cohausz & Florack

(56) Entgegenhaltungen:
- DE-A- 3 531 288
- DE-U- 8 707 093
- US-A- 2 764 251
- US-A- 4 378 980
- US-A- 4 514 197
- US-A- 5 350 443
- US-A- 5 354 365
- PATENT ABSTRACTS OF JAPAN vol. 095, no. 002, 31.März 1995 & JP 06 327940 A (NIPPONDENSO CO LTD), 29.November 1994,

## Beschreibung

Die Erfindung betrifft eine Sicherheitswerkbank mit einem wenigstens eine Arbeitsöffnung aufweisenden Gehäuse, wenigstens einem Filter und Mitteln zur kontrollierten Führung der zu reinigenden Luft in einem Umluftkreislauf oder einem Abluftkanal sowie ein Verfahren zur Reinigung von Arbeitsluft in einer solchen Sicherheitswerkbank.

Sicherheitswerkbänke sind zur Reinigung der Arbeitsluft bei pharmazeutischen, biologischen, chemischen und elektronischen Tätigkeiten seit langem im Einsatz. Ein Großteil der in diesen Bereichen routinemäßig eingesetzten physiologisch/biologisch aktiven Substanzen sind teilweise fruchtschädigend, erbgutverändernd und krebserzeugend. Aus Gründen des Arbeitsschutzes werden Arbeiten mit physiologisch oder biologisch aktiven Substanzen in Sicherheitswerkbänken, sogenannten "LAF-Bänken" (LAF="Laminar Air Flow") durchgeführt, um entstehende Aerosole vom Benutzer wegzuführen und auf einem Filter abzuscheiden. Zur gleichmäßigen Reinigung bauen solche Sicherheitswerkbänke über den gesamten Querschnitt der Arbeitsfläche eine möglichst turbulenzarme Verdrängungsströmung auf. Dadurch ist es möglich, das Produkt vor schädlichen Umwelteinflüssen zu schützen. Gleichzeitig sollen die Sicherheitswerkbänke als Arbeitsschutzeinrichtung den Benutzer und die Umwelt vor der Kontamination durch freigesetzte Schadstoffe bewahren.

Bislang gelangen jedoch die extrem schädlichen gasförmigen Schadstoffe ungehindert in die externe oder interne Abluft und damit in die Umwelt, da in LAF-Bänken üblicherweise Faservliesfilter aus Glasfasern als Filtermedium eingesetzt werden, die im wesentlichen keine adsorptiven Eigenschaften besitzen. Das hat zur Folge, daß Stoffe mit einem hohen Dampfdruck, nach der ursprünglichen Abscheidung gemäß ihres Dampfdruckes bis zur Einstellung eines Gleichgewichts wieder verdampfen und filtergängig sind. Aus der Filtrationstechnik ist es weiter bekannt, daß die Kombination der spezifischen Eigenschaften von Aerosolen und Filtermedien großen Einfluß auf die Abscheidemechanismen und damit auf die Filterwirksamkeit hat.

Schließlich besitzen die in LAF-Bänken eingesetzten Schwebstoffilter keine 100 %-ige Abscheiderate, d.h. einige Partikel, bevorzugt Feinstaerosole werden durch das Filter hindurchgehen. Bei den hohen Luftvolumenströmen in einer LAF-Bank (ca. 2000 m³/h, kann das eine erhebliche Anzahl sein. Da die LAF-Bänke größtenteils mit Umluft betrieben werden und ein Teil der gefilterten Luft zurück in den Raum geführt wird, ist eine Kontamination der Räumlichkeiten und damit eine Kontamination der mit diesen Substanzen hantierenden Personen nicht auszuschließen.

Die Problematik mit extrem schädlichen gas- und dampfförmigen Schadstoffen, wie sie z.B. in der Computer-Chip-Produktion anfallen, ist seit langem bekannt und die dort verwendeten Sicherheitswerkbänke sollten an ein Abluftsystem angeschlossen sein. Es ist jedoch zu bedenken, daß Eingriffe in die Abluftführung einer Sicherheitswerkbank das hohe Risiko einer Kontamination beinhalten. Ist der Druckverlust im Abluftkanal zu hoch, wird die Strömungsrichtung der durch die Arbeitsöffnung einströmenden Raumluft umgekehrt. Dadurch wird ein Teil der Verdrängungsströmung, die mit Partikeln der physiologisch/biologisch aktiven Substanzen und extrem schädlichen gas- und dampfförmigen Komponenten belastet ist, durch die Arbeitsöffnung freigesetzt.

Aus der DE-A-35 31 288 ist eine Sicherheitswerkbank mit einem wenigstens eine Arbeitsöffnung aufweisenden Gehäuse bekannt, die wenigstens einen Filter und Mittel zur wahlweisen kontrollierten Führung der zu reinigenden Luft in einem Umluftkreislauf oder über einen Abluftkanal aufweist. Die bekannte Sicherheitswerkbank weist einen Arbeitsraum auf, dessen Boden ein Lochblech aufweist, durch den die zu reinigende Luft aus dem Arbeitsraum abgesogen wird. Unter dem Lochblech ist sowohl eine Öffnung für einen Umluftkanal vorgesehen als auch ein Filter, an den sich der Abluftkanal anschließt. Zur wahlweise kontrollierten Führung der zu reinigenden Luft kann über den Filter eine Platte geschoben werden und am Eingang des Umluftkanals eine Klappe geöffnet werden, so daß die zu reinigende Luft nur in den Umluftkanal strömen und aus diesem in den Arbeitsraum zurückgeführt werden kann. Zum Abluftbetrieb kann die Klappe des Umluftkanals geschlossen werden und die auf dem Filter liegende Platte entfernt werden, so daß die zu reinigende Luft nur durch den Filter in den Abluftkanal strömen kann.

Der Filter besteht aus einem Hauptfilter und einem diesen nachgeschalteten Aktivkohlefilter. Dabei dient der Aktivkohlefilter zur trockenen Gasadsorption. Zusätzlich zu dem in dem Abluftkanal angeordneten Filter sieht die vorbekannte Sicherheitswerkbank ferner einen Filter in dem Umluftkanal vor, der jedoch lediglich aus demselben Material wie der Hauptfilter des Abluftkanals, einem Hochleistungs-Schwebstoff-Filter, besteht. Damit wird deutlich, daß die in dem Umluftkreislauf zirkulierende Luft durch den in dem Umluftkreislauf vorgesehenen Filter von Schwebstoffen und Partikeln befreit wird.

Ferner beschreibt US-A-5 354 365 den Aufbau eines Filters für Schwebstoffe und ungewünschte Gase, wie z.B.

Küchenabluft, Zigarettenrauch und dergleichen bekannt. Der beschriebene Filter besteht aus zwei Materialschichten gut filternden Materials, zwischen denen ein adsorbierendes Material, beispielsweise aktiviertes Aluminiumoxid, Silicagel oder Aktivkohle, angeordnet ist, um die unerwünschten Gase zu adsorbieren. Der vorbekannte Filter ist so aufgebaut, daß die eine Schicht des Fasermaterials in halbkreisförmige Buchten gelegt wird, an deren zusammenlaufenden Spitzen das zweite Fasermaterial derart angeklebt wird, daß es die halbkreisförmigen Buchten gerade abschließt. Die entstandenen Zwischenräume werden mit dem Adsorptionsmaterial gefüllt. Durch diese Anordnung wird ein Filter geschaffen, der sowohl eine große Oberfläche zur Filterung der Partikel aufweist, als auch ein großes Volumen, das der Gassorption dient.

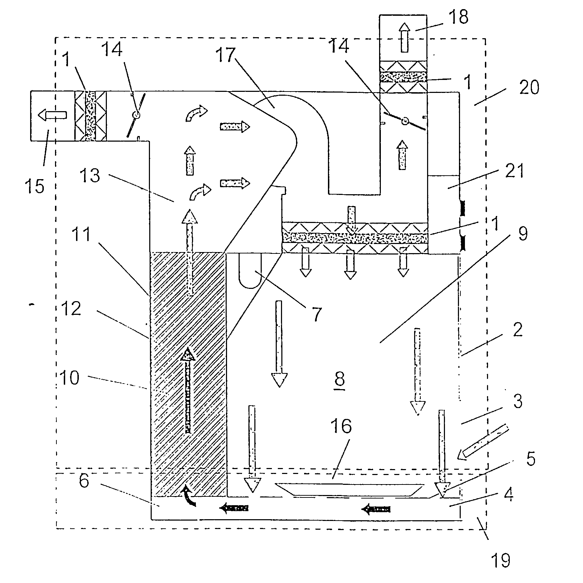

Wie der Fig. 4 aus der US-A-5 354 365 zu entnehmen ist, führt dieser spezielle Aufbau jedoch dazu, daß der Gasstrom ungleichmäßig durch den Filter hindurchtritt und dadurch bedingt auch ungleichmäßig gut gefiltert wird. In der Nähe der spitz zueinander zulaufenden Filtertaschen wird der Gasstrom nur durch einen kleinen Teil des Adsorptionsmaterials durchtreten, was auch durch die an dieser Stelle herrschende hohe Luftgeschwindigkeit zu erkennen ist und wie dies in der Fig. 4 dargestellt ist. Eine gleichmäßigere Verteilung in der Luftströmung stellt sich erst dann ein, wenn die Spitzen der spitz zueinander zulaufenden Filtertaschen mit Partikeln verstopft sind, so daß der Gasstrom nur durch den breiteren Teil der Filtertaschen strömen kann (vgl. Fig. 5). Ein verstopfter Filter führt jedoch zu einem erhöhten Luftwiderstand, so daß solche Filter in der Regel ausgewechselt werden. Demnach wird der Betriebszustand des vorbekannten Filters der in der Fig. 4 dargestellte Zustand sein.
Der Erfindung liegt daher die Aufgabe zugrunde, die eingangs genannte und zuvor näher beschriebene Sicherheitswerkbank so auszugestalten und weiterzubilden sowie ein entsprechendes Reinigungsverfahren anzugeben, so daß eine Kontamination der Räumlichkeiten und der an einer solchen Sicherheitswerkbank arbeitenden Personen zuverlässig ausgeschlossen wird. Darüber hinaus ist erwünscht, daß auch eine Belastung der Umwelt verhindert wird, wenn die Sicherheitswerkbank im Abluftbetrieb betrieben wird.

Die erfindungsgemäße Sicherheitswerkbank gemäß dem Oberbegriff von Patentanspruch 1 löst die vorgenannte Aufgabe dadurch, daß als Filter ein Verbundmaterial aus wenigstens zwei Schichten eines Fasermaterials und wenigstens einer zwischen den äußeren Schichten angeordneten mittleren Schicht aus einem Adsorbens vorgesehen ist und daß jeweils mindestens ein Filter im Umluftkreislauf und im Abluftkanal vorgesehen ist. Die Erfindung schlägt also einen Filter vor, bei dem zwischen wenigstens zwei äußeren Lagen aus Fasermaterial, wie beispielsweise Glasfaservlies, welche einerseits als Stützschicht und andererseits als Grobfilter dienen, eine mittlere Schicht aus einem Adsorbens vorgesehen ist. Dabei kann es sich gemäß weiteren Ausgestaltungen der Erfindung um Aktivkohle oder auch um eine Zeolithschicht handeln. Das Adsorbens bindet dabei die gasförmigen Schadstoffe sorptiv.

Nach einer weiteren Lehre der Erfindung kann dabei das verwendete Adsorbens als Stützschicht angeordnet sein, wobei durch die äußeren Schichten aus Fasermaterial der Austrag von Adsorbenspartikeln zuverlässig vermieden wird. In weiterer Ausgestaltung der Erfindung ist es jedoch auch möglich, die Sorbentien als gewebte Schicht (Whisker) oder auf einem Trägermaterial gebunden einzusetzen, wobei auch noch weitere Materialien zusätzlich verwebt sein können. Weiterhin kann das Adsorbens auf einem Trägermaterial gebunden in die beschriebene Anordnung eingefaßt werden.

Eine besonders vorteilhafte Entsorgung der Verbundmaterialfilter gemäß vorliegender Erfindung läßt sich dann erreichen, wenn das Filter aus mehreren einzelnen Kassetten besteht, die durch geeignete Mittel miteinander verbunden sind und ein Zusammenfalten bzw. Zusammenlegen des zu entsorgenden Filters gestatten. Bei den bekannten LAF-Bänken sind die Filter in Kassetten mit einem starren Rahmen angeordnet. Diese Konstruktion ist nicht nur unhandlich, bedingt durch ihre Größe müssen die bekannten Filter beim Ausbau zersägt werden, wobei eine erhöhte Gefahr der Kontamination der Umgebung auftritt. Um dies zu vermeiden, sieht eine weitere Lehre der Erfindung vor, daß als Mittel zum Verbinden der einzelnen Filterteile Scharniere oder Nut und Feder-Anordnungen vorgesehen sind. Die Anordnung solcher oben genannter Konstruktionen, die beliebig ausgeführt sein können, sollte dabei so erfolgen, daß das Filter beim Ausbau so zusammengelegt werden kann, daß die für die anschließende Entsorgung einzuhaltenden Dimensionen problemlos erreicht werden können.

Eine weitere Ausgestaltung der Erfindung sieht vor, daß das Filter als Bandfilter ausgebildet ist, welches von einer Rolle oder Spule in eine Filter-Wechselkassette mit wenigstens zwei Kartuschen geführt wird, von denen eine Arbeitskartusche und die andere als Wechselkartusche ausgebildet ist. Ähnlich der bekannten Rollfilme, wird das Bandfilter nach der Beladung in die zweite Kartusche geführt, die dann komplett entsorgt werden kann. Die von der Erfindung vorgeschlagenen Filter lassen sich nicht nur bei neuen Sicherheitswerkbänken einsetzen, sondern sie können auch in bestehende LAF-Bänke implementiert werden.

Hinsichtlich des Reinigungsverfahrens besteht die Lösung der Aufgabe nach einer ersten Alternative darin, daß die zu reinigende Luft neben der Filterreinigung einer Totaloxidation unterzogen wird. Hierzu wird die im Inneren der Sicherheitswerkbank unten angesaugte Luft einem Reaktionsraum zugeführt und dort von den physiologisch/biologisch aktiven Substanzen gereinigt. Die Totaloxidation kann dabei durch unterschiedliche Oxidationsvorgänge realisiert werden, hierzu kann eine katalytische Oxidation, eine oxidative Wäsche, eine Oxidation mit Luft unter Einfluß von UV-Licht oder eine Oxidation in einer Flamme dienen.

Gemäß einer zweiten Alternative löst ein erfindungsgemäßes Reinigungsverfahren die Aufgabe dadurch, daß die zu reinigende Luft neben der Filterreinigung einer Abgaswäsche, beispielsweise durch Absorption mittels alkalischer Wäsche, unterzogen wird.

Bei der katalytischen Oxidation wird der Abluftstrom durch einen ausreichend dimensionierten, sich an den Rückwänden bzw. Seitenwänden der Sicherheitswerkbank befindenden Oxidationskatalysator geführt. Hierfür kann ein Katalysatorträger aus keramischen oder metallischen Materialien in bekannter Wabenbauart dienen. Als katalytisch aktive Substanzen werden die Metalle der Nebengruppenelemente (Titan, Platin, Nickel od. dgl.) eingesetzt. Als Oxidationsmittel kann Luft, Sauerstoff und Stickstoff in wechselnden Anteilen oder aber Ozon verwendet werden. Die notwendige Aktivierungsenergie zur Durchführung dieser chemischen Reaktion wird durch ein beispielsweise elektrisch betriebenes Heizregister oder durch eine andere Form von Energie, wie z.B. Strahlungsenergie in Form von UV-Licht, aufgebracht.

Bei der oxidativen Wäsche wird die Abluft durch einen ausreichend groß dimensionierten Wäscher geleitet, bei dem im Gegenstrom zum Abgas das Oxidationsmittel geführt wird. Als mögliche Ausführungsformen können hier für sich bekannte Gegenstromadsorber wie Füllkörperwäscher, Sprühadsorber, Glockenbodenkolonnen, Strahlwäscher od. dgl. zum Einsatz kommen. Je nach Schadstoffinhalt im Abluftstrom kommen auch mehrstufige Ausführungen in Frage. Als Oxidations- bzw. Waschlösung können Wasserstoffperoxid (H₂O₂), Kaliumpermanganat (KMnO₄) und/oder Salpetersäure (HNO₃), Natronlauge (NaOH) od. dgl. dienen. Je nach Art des Lösungsmittels der Waschlösung wird die Adsorptionseinrichtung im Reaktionsraum aus Glas oder Edelstahl hergestellt.

Bei der Oxidation mit Luft bzw. mit sauerstoffhaltigem Gas unter Einfluß von UV-Licht handelt es sich nicht um ein katalytisches Verfahren. Hierbei wird der Abluftstrom durch ein als Reaktionskammer ausgebildetes Segment des Abluftkanals gerichtet geführt und durch Reaktion mit UV-Licht unter evtl. Zusatz von Ozon (O₃) von den physiologisch/biologisch aktiven Substanzen gereinigt.

Schließlich ist es auch möglich, die Oxidation mittels Luft in einem als Drallflamme ausgebildeten Brenner durchzuführen, wobei die Abluft tangential der Flamme zugeführt wird. Dabei wird ein Segment des Abgaskanals als Oxidationsraum benutzt. Da bei diesem Verfahren große Wärmeströme erzeugt werden, kommt ein direkter Umluftbetrieb nicht in Frage. Soll die Flammenoxidation im Umluftbetrieb betrieben werden, ist der Einsatz eines Wärmetauschers oberhalb des Reaktionsraumes vorzusehen.

Das erfindungsgemäße Reinigungsverfahren kann sowohl im Umluftverfahren als auch im Abluftverfahren eingesetzt werden, wobei jedoch jeweils zweckmäßigerweise die Totaloxidation vor der eigentlichen Filterreinigung erfolgt.

Durch die Erfindung wird eine deutliche Verbesserung der Schutzfunktion von Sicherheitswerkbänken erreicht, indem die spezielle Ausgestaltung des verwendeten Filters sowie die chemische Reaktion der Totaloxidation für eine sichere Abscheidung von physiologisch/biologisch aktiven Substanzen wie Zytostatika sorgt.

Die erfindungsgemäße Sicherheitswerkbank ist nachfolgend anhand einer lediglich ein Ausführungsbeispiel darstellenden Zeichnung näher erläutert. In der einzigen Figur ist eine Sicherheitswerkbank im Querschnitt schematisch dargestellt.

Die erfindungsgemäße LAF-Bank weist dabei an drei verschiedenen Stellen ein Mehrschichtverbundvlies 1 auf. Dabei ist nur angedeutet, daß das verwendete Filter im dargestellten und insoweit bevorzugten Ausführungsbeispiel zwei äußere Stützschichten aus einem Fasermaterial aufweist, zwischen denen eine mittlere Schicht aus einem Adsorbens, bevorzugt Aktivkohle, angeordnet ist.

In einer Frontscheibe 2 erkennt man eine Arbeitsöffnung 3 durch die - wie mit dem Pfeil angedeutet - Außenluft in das unter Unterdruck stehende Innere der Sicherheitswerkbank angesaugt wird. Die kontaminierte Luft wird im Unterteil 19 des Gehäuses 20 der Sicherheitswerkbank über eine Auffangwanne 4, welche mit einem Lochblech 5 abgedeckt ist durch Umluftkanäle 6, 10 wie durch die Pfeile dargestellt in den Reaktionsraum 12 geführt, welcher im dargestellten und insoweit bevorzugten Ausführungsbeispiel unmittelbar an der Rückwand 11 des Gehäuses 20 der erfindungsgemäßen Sicherheitswerkbank anschließt. Die Luftführung erfolgt dabei durch einen von einem Ventilator 17 erzeugten Unterdruck im Saugraum 13, wobei über nur schematisch gezeigte Steuerklappen 14 im Umluft- und/oder Abluftbetrieb gefahren werden kann. Mit 15 ist dabei der Abluftkanal zur Abluftsammelleitung dargestellt und und mit 18 der Abluftkanal in den Bedienraum.

Im Inneren des Gehäuses 20 befindet sich der Arbeitsraum 9, welcher seitlich durch Seitenwände 8, nach unten durch eine Arbeitsplatte 16, nach hinten durch die Rückwand 11 und nach vorne durch die Frontscheibe 2 begrenzt ist.

Erfindungsgemäß durchläuft die zu reinigende Luft zunächst den Reaktionsraum 12, wo eine Totaloxidation stattfindet und anschließend erfolgt die eigentliche Behandlung im erfindungsgemäßen Filterverbundvlies 1.

Erfindungsgemäß ist sichergestellt, daß sowohl im Umluftals auch im Abluftbetrieb eine vollständige Abscheidung der physiologisch/biologisch aktiven Schadstoffe gewährleistet ist. Wird der Ventilator 17 durch das Bedienpult 21 nach Beendigung des Arbeitsvorganges ausgeschaltet, so ist durch das zum Arbeitsraum 9 für den Umluftbetrieb angeordnete Filter 1 sichergestellt, daß auch die im Arbeitsraum 9 vorhandene Luft frei von Schadstoffen ist, so daß ein Austritt nach Fortfall des Unterdrucks durch die Arbeitsöffnungen 3 in den Bedienraum völlig unkritisch ist.

## Patentansprüche

1. Sicherheitswerkbank mit einem wenigstens eine Arbeitsöffnung aufweisenden Gehäuse, wenigstens einem Filter (1) und Mitteln (14) zur wahlweisen kontrollierten Führung der zu reinigenden Luft in einen Umluftkreislauf oder in einen Abluftkanal (15 bzw. 18),
**dadurch gekennzeichnet,** daß als Filter (1) ein Verbundmaterial aus wenigstens zwei Schichten eines Fasermaterials und wenigstens einer zwischen den äußeren Schichten angeordneten mittleren Schicht aus einem Adsorbens vorgesehen ist und daß jeweils mindestens ein Filter (1) in dem Umluftkreislauf und dem Abluftkanal vorgesehen ist.

2. Sicherheitswerkbank nach Anspruch 1,
**dadurch gekennzeichnet**, daß das Adsorbens Aktivkohle ist.

3. Sicherheitswerkbank nach Anspruch 1,
**dadurch gekennzeichnet**, daß das Adsorbens aus Zeolithen besteht.

4. Sicherheitswerkbank nach einem der Ansprüche 1 bis 3,
**dadurch gekennzeichnet**, daß das Fasermaterial der äußeren Schichten Fasergewebe, Faservlies oder ein Faserverbund mit geeigneten Eigenschaften ist.

5. Sicherheitswerkbank nach einem der Ansprüche 1 bis 4,
**dadurch gekennzeichnet**, daß das Adsorbens als Schüttschicht im Filter (1) angeordnet ist.

6. Sicherheitswerkbank nach einem der Ansprüche 1 bis 4,
**dadurch gekennzeichnet**, daß das Adsorbens als Webschicht ausgebildet im Filter (1) angeordnet ist.

7. Sicherheitswerkbank nach einem der Ansprüche 1 bis 4,
**dadurch gekennzeichnet**, daß das Adsorbens auf einem Trägermaterial gebunden im Filter (1) angeordnet ist.

8. Sicherheitswerkbank nach einem der Ansprüche 1 bis 7,
**dadurch gekennzeichnet**, daß das Filter (1) aus mehreren einzelnen Kassetten besteht.

9. Sicherheitswerkbank nach Anspruch 8,
**dadurch gekennzeichnet,** daß die einzelnen Kassetten durch geeignete Mittel miteinander verbunden sind und ein Zusammenfalten des zu entsorgenden Filters (1) gestatten.

10. Sicherheitswerkbank nach Anspruch 8 oder 9,
**dadurch gekennzeichnet**, daß als Mittel zum Verbinden der Kassetten Scharniere vorgesehen sind.

11. Sicherheitswerkbank nach Anspruch 8 oder 9,
**dadurch gekennzeichnet,** daß als Mittel zum Verbinden der Kassetten Nut- und Federverbindungen vorgesehen sind.

12. Sicherheitswerkbank nach einem der Ansprüche 1 bis 11,
**dadurch gekennzeichnet**, daß das Filter (1) als Bandfilter ausgebildet ist.

13. Sicherheitswerkbank nach Anspruch 12,
**dadurch gekennzeichnet**, daß das Filter (1) von einer Rolle oder Spule in eine Filter-Wechselkassette mit wenigstens zwei Kartuschen geführt wird, von denen eine als Arbeitskartusche und die andere als Wechselkartusche ausgebildet ist.

14. Verfahren zur Reinigung von Arbeitsluft in einer Sicherheitswerkbank nach einem der Ansprüche 1 bis 13,
**dadurch gekennzeichnet**, daß die zu reinigende Luft neben der Filterreinigung einer Abgaswäsche unterzogen wird.

15. Verfahren nach Anspruch 14,
**dadurch gekennzeichnet,** daß die Gasreinigung durch Absorption mittels alkalischer Wäsche erfolgt.

16. Verfahren zur Reinigung von Arbeitsluft in einer Sicherheitswerkbank nach einem der Ansprüche 1 bis 13,
**dadurch gekennzeichnet**, daß die zu reinigende Luft neben der Filterreinigung einer Totaloxidation unterzogen wird.

17. Verfahren nach Anspruch 16,
**dadurch gekennzeichnet**, daß als Totaloxidation eine katalytische Oxidation in einem entsprechenden Katalysator erfolgt.

18. Verfahren nach Anspruch 16 oder 17,
**dadurch gekennzeichnet**, daß als Totaloxidation eine oxidative Wäsche in einem entsprechenden Wäscher erfolgt.

19. Verfahren nach einem der Ansprüche 16 bis 18,
**dadurch gekennzeichnet**, daß als Totaloxidation eine Oxidation mit Luft bzw. mit sauerstoffhaltigem Gas unter Einfluß von UV-Licht erfolgt.

20. Verfahren nach einem der Ansprüche 16 bis 19,
**dadurch gekennzeichnet**, daß als Totaloxidation eine Oxidation in einer Flamme erfolgt.

21. Verfahren nach einem der Ansprüche 16 bis 20,
**dadurch gekennzeichnet**, daß die Totaloxidation vor der eigentlichen Filterreinigung in einem Umluftverfahren erfolgt.

22. Verfahren nach einem der Ansprüche 16 bis 20,
**dadurch gekennzeichnet**, daß die Totaloxidation vor der eigentlichen Filterreinigung in einem Abluftverfahren erfolgt.

## Claims

1. A safety workbench with a housing comprising at least one work opening, at least one filter (1), and means (14) for an alternating controlled guiding of air to be cleaned in a recirculating air circuit or in an exhaust channel (15 or 18), characterized in that the filter (1) is a composite material of at least two layers of a fiber material and at least one middle layer arranged between the outer layers and comprised of an absorbent material and that at least one filter (1) is provided in the recirculating air circuit and in the exhaust channel, respectively.

2. A safety workbench according to claim 1, characterized in that the absorbent material is activated charcoal.

3. A safety workbench according to claim 1, characterized in that the absorbent material is comprised of zeolites

4. A safety workbench according to one of the claims 1 to 3, characterized in that the fiber material of the outer layers is a woven fiber material, a nonwoven fiber material, or a fiber composite with suitable properties.

5. A safety workbench according to one of the claims 1 to 4, characterized in that the absorbent material is arranged as a packed bed in the filter (1).

6. A safety workbench according to one of the claims 1 to 4, characterized in that the absorbent material is a woven layer arranged in the filter (1).

7. A safety workbench according to one of the claims 1 to 4, characterized in that the absorbent material is bonded on a support material and arranged in the filter (1).

8. A safety workbench according to one of the claims 1 to 7, characterized in that the filter (1) is comprised of several individual cassettes.

9. A safety workbench according to claim 8, characterized in that the individual cassettes are connected to one another by suitable means and allow folding of the filter (1) to be disposed.

10. A safety workbench according to claim 8 or 9, characterized in that hinges are provided as means for connecting the cassettes.

11. A safety workbench according to claim 8 or 9, characterized in that tongue and groove connections are provided as means for connecting the cassettes.

12. A safety workbench according to one of the claims 1 to 11, characterized in that the filter (1) is a band filter.

13. A safety workbench according to claim 12, characterized in that the filter (1) is guided from a roll or spool into a filter changer cassette with at least two cartridges wherein one of them is a working cartridge (filter cartridge) and the other is an exchange cartridge (disposable cartridge).

14. A method for cleaning working air in a safety workbench according to one of the claims 1 to 13, characterized in that the air to be cleaned is subjected to exhaust gas scrubbing in addition to being subjected to cleaning by filter.

15. A method according to claim 14, characterized in that the gas cleaning is carried out by absorption by means of alkaline washing.

16. A method for cleaning working air in a safety workbench according to one of the claims 1 to 13, characterized in that the air to be cleaned is subjected to a total oxidation in addition to cleaning by filter.

17. A method according to claim 16, characterized in that the total oxidation is carried out as catalytic oxidation in a corresponding catalyst.

18. A method according to claim 16 or 17, characterized in that the total oxidation is carried out as oxydative scrubbing in a corresponding scrubber.

19. A method according to one of the claims 16 to 18, characterized in that the total oxidation is carried out as oxidation with air or with an oxygen-containing gas under the effect of UV light.

20. A method according to one of the claims 16 to 19, characterized in that the total oxidation is carried out as oxidation in a flame.

21. A method according to one of the claims 16 to 20, characterized in that the total oxidation is carried out in a recirculating air method before the actual cleaning by filter.

22. A method according to one of the claims 16 to 20, characterized in that the total oxidation is carried out in an exhaust method before the actual cleaning by filter.

## Revendications

1. Etabli sécurisé comprenant au moins un carter présentant une ouverture de travail, au moins un filtre (1) et des moyens (14) permettant de contrôler optionnellement la canalisation de l'air à purifier dans un circuit d'air de circulation, ou dans un canal d'air d'évacuation (15, resp. 18), caractérisé en ce qu'on a prévu comme filtre (1) un matériau composite constitué d'au moins deux couches d'une matière fibreuse et d'au moins une couche centrale agencée entre les couches extérieures et constituée d'un adsorbant, et en ce qu'on a prévu au moins un filtre (1) et dans le circuit d'air de circulation et dans le canal d'air d'évacuation.

2. Etabli sécurisé selon la revendication 1, caractérisé en ce que l'adsorbant est du charbon actif.

3. Etabli sécurisé selon la revendication 1, caractérisé en ce que l'adsorbant est constitué de zéolithes.

4. Etabli sécurisé selon l'une des revendications 1 à 3, caractérisé en ce que la matière fibreuse des couches extérieures est un tissu fibreux, un voile fibreux ou un composite fibreux avec des propriétés appropriées.

5. Etabli sécurisé selon l'une des revendications 1 à 4, caractérisé en ce que l'adsorbant est disposé dans le filtre (1) sous forme de lit tassé.

6. Etabli sécurisé selon l'une des revendications 1 à 4, caractérisé en ce qu'on a prévu l'adsorbant sous forme de couche tissée dans le filtre (1).

7. Etabli sécurisé selon l'une des revendications 1 à 4, caractérisé en ce que l'adsorbant est disposé sur un substrat lié dans le filtre (1).

8. Etabli sécurisé selon l'une des revendications 1 à 7, caractérisé en ce que le filtre (1) se compose de plusieurs cassettes.

9. Etabli sécurisé selon la revendication 8, caractérisé en ce que les cassettes individuelles sont liées entre elles par des moyens appropriés et permettent un repliage du filtre (1) à éliminer.

10. Etabli sécurisé selon la revendication 8 ou 9, caractérisé en ce que des charnières sont prévues comme moyen de liaison des cassettes.

11. Etabli sécurisé selon la revendication 8 ou 9, caractérisé en ce qu'on a prévu des raccords par rainure et languette comme moyen de liaison des cassettes.

12. Etabli sécurisé selon l'une des revendications 1 à 11, caractérisé en ce que le filtre (1) est un filtre à bande.

13. Etabli sécurisé selon la revendication 12, caractérisé en ce que le filtre (1) est guidé par un rouleau ou une bobine dans une cassette filtrante de rechange avec au moins deux cartouches, dont l'une est une cartouche de travail (cartouche de filtre) et l'autre une cartouche de rechange (cartouche jetable).

14. Procédé d'épuration d'air de travail dans un établi sécurisé selon l'une des revendications 1 à 13, caractérisé en ce que l'air à purifier et encore soumis à une lessive de gaz usé en plus de l'épuration par filtre.

15. Procédé selon la revendication 14, caractérisé en ce que la purification des gaz se fait par absorption par lessive alcaline.

16. Procédé d'épuration d'air de travail dans un établi sécurisé selon l'une des revendications 1 à 13, caractérisé en ce que l'air à épurer est soumis à une oxydation totale en plus de l'épuration par filtre.

17. Procédé selon la revendication 16, caractérisé en ce que l'oxydation totale prend la forme d'une oxydation catalytique dans un catalyseur correspondant.

18. Procédé selon la revendication 16 ou 17, caractérisé en ce que l'oxydation totale prend la forme d'une lessive oxydante dans un laveur approprié.

19. Procédé selon l'une des revendications 16 à 18, caractérisé en ce que l'oxydation totale prend la forme d'une oxydation avec de l'air ou avec du gaz contenant de l'oxygène sous influence de lumière ultraviolette.

20. Procédé selon l'une des revendications 16 à 19, caractérisé en ce que l'oxydation totale se fait par oxydation dans une flamme.

21. Procédé selon l'une des revendications 16 à 20, caractérisé en ce que l'oxydation totale se fait par l'épuration par filtre proprement dite, dans un procédé de circulation d'air.

22. Procédé selon l'une des revendications 16 à 20, caractérisé en ce que l'oxydation totale se fait avant l'épuration par filtre proprement dite, dans un procédé d'évacuation d'air.
